# EUROPÄISCHE PATENTANMELDUNG

(11) **EP 4 825 604 A1**
(43) Veröffentlichungstag der Anmeldung: **21.10.2026**
(21) Anmeldenummer: 26165790.2
(22) Anmeldetag: 18.03.2026
(51) Int. Cl.: B60C 1/00, C08K 5/13, C08L 7/00, C08L 9/00

(54) **FAHRZEUGREIFEN, VULKANISAT UND SCHWEFELVERNETZBARE KAUTSCHUKMISCHUNG MIT SCHUTZ VOR ALTERUNGSPHÄNOMENEN**

(30) Priorität: 07.04.2025 DE 102025113520
(71) Anmelder: Continental Reifen Deutschland GmbH, 30175 Hannover (DE)
(72) Erfinder: Dr. Becheanu-Böke, Armand Gabriel, 30175 Hannover (DE); Dr. Bogusz, Kathrin, 30175 Hannover (DE); Dr. Wehming-Bomkamp, Kathrin, 30175 Hannover (DE); Dr. Kügler, Merle, 30175 Hannover (DE); Dr. Voiges, Kristin, 30175 Hannover (DE)
(74) Vertreter: Continental Corporation

(57) **Zusammenfassung**

Die Erfindung betrifft eine Kautschukmischung, die wenigstens folgende Bestandteile enthält:
a) 40 bis 100 phr, bevorzugt 60 bis 90 phr zumindest eines teil-hydrierten Dienkautschuks, ausgewählt aus Butadien-Kautschuk und/oder Styrol-Butadien-Kautschuk, wobei der Hydrierungsgrad, also der Anteil der ursprünglichen Doppelbindungen des teil-hydrierten Dienkautschuks, die vollständig hydriert wurden, 45 bis 95 % beträgt,
b) 1 bis 7,5 phr, bevorzugt 2 bis 5 phr zumindest einer substituierten Phenolverbindung.

## Beschreibung

Die Erfindung betrifft einen Fahrzeugreifen. Ferner betrifft die Erfindung ein Vulkanisat, insbesondere für den Einsatz in Fahrzeugreifen oder Komponenten des Fahrzeugreifens und eine Gummizusammensetzung bzw. eine schwefelvernetzbare Kautschukmischung, aus der das Vulkanisat gebildet werden kann.

Die Kautschukzusammensetzung bestimmt in hohem Maße die Eigenschaften eines Fahrzeugreifens. Daher werden an diese Kautschukmischungen hohe Anforderungen gestellt.

Insbesondere das Alterungsverhalten spielt eine wesentliche Rolle. Unter Alterung wird hierbei insbesondere aber nicht ausschließlich die Veränderung des Gummimaterials durch Wechselwirkungen insbesondere mit dem Sauerstoff und dem Ozon in der Atmosphäre verstanden. Die Alterung führt insbesondere zu einer zunehmenden Porosität oder Versteifung des Gummimaterials.

Es gibt im Stand der Technik grundsätzlich vor allem zwei Möglichkeiten, um eine Gummimischung vor Alterung zu schützen: Der Einsatz von aminischen Alterungsschutzmitteln in der Gummimischung (vgl. hierzu z.B.: K. Berghus et al.: Handbuch für die Gummi-Industrie, 2. Ausgabe, Kapitel 4.) oder die Beschichtung der Oberfläche des gebildeten Vulkanisats, z.B. mit einem Polymer mit gesättigten Kohlenstoffketten, wie z.B. aus der EP 0 228 982 A2 bekannt.

Beide oben genannten Möglichkeiten haben Nachteile. So weisen die im Stand der Technik verwendeten aminischen Alterungsschutzmittel grundsätzlich eine Toxizität auf. Die zum Alterungsschutz notwendige Zudosierung von Alterungsschutzmitteln, die ausreichend Schutz vor Wechselwirkungen mit Sauerstoff und Ozon bieten, führt zu merklicher Umweltbelastung. Es sind daher bereits gesetzliche Grenzwerte bzgl. des Einsatzes bekannter Alterungsschutzmittel wie 6PPD (N-(1,3-Dimethylbutyl)-N'-phenyl-p-phenylendiamin) oder DTPD (N,N'-Di-(p-tolyl)-p-phenylendiamin, N,N'-(p-Phenylen)-ditoluidin) oder anderer Phenylendiamine (PD) in Diskussion.

Das Auftragen von zusätzlichen Beschichtungen ist wiederum mit Schwierigkeiten und Mehraufwand und -kosten in der Prozessierung und Herstellung der Reifen verbunden. Weiterhin funktioniert der Schutz durch Beschichten nur bedingt, sobald Abriebs-Phänomene auftreten.

Es ist daher zumindest eine Aufgabe der vorliegenden Erfindung, die Dosierung an aminischen Alterungsschutzmitteln wie z.B. 6PPD zu reduzieren oder gänzlich zu ersetzen, wobei die Eigenschaften der Reifen im Neu- und Nutzungszustand, insbesondere die Alterungsbeständigkeit, beibehalten werden sollen.

Mit der erfindungsgemäßen Kautschukmischung, dem erfindungsgemäßen Vulkanisat, und dem erfindungsgemäßen Fahrzeugreifen können die Eigenschaften des Reifens beibehalten werden und der Anteil an toxischen Alterungsschutzmitteln reduziert werden.

Von der Erfindung sind sämtliche vorteilhafte Ausgestaltungen, die sich unter anderem in den Patentansprüchen widerspiegeln, umfasst. Insbesondere sind von der Erfindung auch Ausgestaltungen umfasst, die sich durch Kombination unterschiedlicher Merkmale, beispielsweise von Bestandteilen der Kautschukmischung oder von Elementen des Reifens, unterschiedlicher Abstufungen bei der Bevorzugung dieser Merkmale ergeben, sodass auch eine Kombination eines ersten als "bevorzugt" bezeichneten Merkmals oder im Rahmen einer vorteilhaften Ausführungsform beschriebenen Merkmals mit einem weiteren als z. B. "besonders bevorzugt" bezeichneten Merkmal von der Erfindung umfasst ist.

Im Folgenden werden die Bestandteile der erfindungsgemäßen Kautschukmischung und die Eigenschaften des daraus hergestellten Vulkanisats und Reifens näher beschrieben.

Sämtliche Angaben zu den Bestandteilen der erfindungsgemäßen Kautschukmischung jeglicher Abstufung bei der Bevorzugung dieser Merkmale gelten entsprechend ebenfalls für das erfindungsgemäße Vulkanisat, den erfindungsgemäßen Fahrzeugreifen sowie erfindungsgemäße Verwendungen.

Die in dieser Schrift verwendete Angabe phr (parts per hundred parts of rubber by weight) ist dabei die in der Kautschukindustrie übliche Mengenangabe für Mischungsrezepturen. Die Dosierung der Gewichtsteile der einzelnen Substanzen wird in dieser Schrift auf 100 Gewichtsteile der gesamten Masse aller in der Mischung vorhandenen Kautschuke bezogen mit einem Molekulargewicht Mw gemäß GPC von größer als 20000 g/mol. Die angegebenen Wertebereiche sind immer einschließlich der Grenzwerte.

Erfindungsgemäß enthält die Kautschukmischung wenigstens einen teilhydrierten Dienkautschuk, der ausgewählt ist aus einem oder mehreren von teilhydriertem Butadien-Kautschuk (Synonyme: BR, Polybutadien) und/oder teilhydriertem Styrol-Butadien-Kautschuk (SBR), insbesondere teilhydriertem lösungsmittelpolymerisierten SBR (SSBR).

Als Dienkautschuke werden Kautschuke bezeichnet, die durch Polymerisation oder Copolymerisation von Dienen und/oder Cycloalkenen entstehen und somit in nicht-hydrierter Form entweder in der Hauptkette oder in den Seitengruppen C=C-Doppelbindungen aufweisen.

"Teilhydriert" bedeutet im Sinne des vorliegenden Textes, dass ein Anteil der ursprünglichen Doppelbindungen in den Dienkautschuken vollständig hydriert wurde und als gesättigte Einfachbindung vorliegt.

Der Anteil des teilhydrierten Dienkautschuks in der Kautschukmischung beträgt mindestens 40 phr, bevorzugt zwischen 50 und 100 phr, bevorzugter zwischen 60 und 100 phr, besonders bevorzugter zwischen 60 und 90 phr.

Der Hydrierungsgrad, also der Anteil der Doppelbindungen des teilhydrierten Dienkautschuks, die vollständig hydriert wurden, beträgt bevorzugt 45 bis 95%, bevorzugter 60 bis 85 %, besonders bevorzugt zwischen 70 und 85 %.

Ein zu hoher Hydrierungsgrad führt zu wenigen Doppelbindungen, die als Angriffspunkt der Vulkanisationschemie bei der Vernetzung der Kautschuke dienen können. Somit würde der vulkanisierte Kautschuk unzureichend vernetzt sein.

Ein zu niedriger Hydrierungsgrad würde insbesondere bei Reduzierung des Anteils toxischer Alterungsschutzmittel wie 6PDD zu einer unerwünschten Abnahme der Alterungsbeständigkeit, insbesondere Ozonbeständigkeit, der Kautschukmischung führen.

Die Kautschukmischung kann weiterhin bis zu maximal 60 phr weitere (nicht-hydrierte) Dienkautschuke neben den teilhydrierten Dienkautschuken umfassen, insbesondere ausgewählt aus Butadien-Kautschuk und/oder Styrol-Butadien-Kautschuk (SBR) und/oder Polyisopren (Isopren-Kautschuk, IR/NR). Der Anteil an nicht-hydrierten Dienkautschuken beträgt bevorzugt maximal 60 phr, bevorzugter zwischen 0 und 50 phr, besonders bevorzugt zwischen 10 und 40 phr (Grenzwerte sind immer einschließlich zu verstehen).

Das Polyisopren kann natürliches Polyisopren (NR) oder auch synthetisches Polyisopren (IR) oder beides umfassen.

Bevorzugt enthält die Kautschukmischung zumindest SBR in teil-hydrierter oder in teil-hydrierter und nicht-hydrierter Form. Die Kautschukmischung weist in einer Ausführungsform ausschließlich SBR als Dienkautschuk auf.

Der SBR ist bevorzugt ausgewählt aus der Gruppe bestehend aus Styrol-Butadien-Kautschuken mit einer Glasübergangstemperatur Tg, gemessen mittels DSC, im Bereich von -120 bis -20 °C, bevorzugt im Bereich von -100 bis -20 °C, besonders bevorzugt im Bereich von -95 bis -20 °C, ganz besonders bevorzugt im Bereich von -95 bis -45 °C, überaus bevorzugt im Bereich von -95 bis -55 °C, insbesondere bevorzugt im Bereich von -85 bis -55 °C.

SBR bietet sich vorteilhaft für das variable Einstellen der Kautschukeigenschaften wie der Glasübergangstemperatur an. SBR kann gut und auf verschiedene Weise funktionalisiert und modifiziert werden.

Der SBR kann in der erfindungsgemäßen Kautschukmischung aber auch ganz oder teilweise durch BR ersetzt werden. Wie der SBR kann auch der BR in teil-hydrierter oder in teil-hydrierter und nicht-hydrierter oder in nicht-hydrierter Form vorliegen.

Bei dem eingesetzten SBR kann es sich insbesondere um lösungspolymerisierten Styrol-Butadien-Kautschuk (SSBR, siehe auch oben) oder auch um emulsionspolymerisierten Styrol-Butadien-Kautschuk (ESBR) handeln.

Bevorzugt sind einer oder mehrere der eingesetzten Dienkautschuke BR und SBR für die Anbindung von Ruß oder Kieselsäure als Füllstoff funktionalisiert (siehe auch unten).

Die Erfinder haben überraschenderweise festgestellt, dass bei Einsatz der oben genannten teilhydrierten Dienkautschuke mit dem beschriebenen Hydrierungsgrad in Kombination mit phenolischen Alterungsschutzmitteln die Eigenschaften eines daraus gebildeten Vulkanisats nach Alterung ähnlich den Eigenschaften eines Vulkanisats einer vergleichbaren Kautschukmischung sind, die keinen teil-hydrierten Dienkautschuk und keine phenolischen Alterungsschutzmittel, sondern üblicher Weise eingesetzte aminische Alterungsschutzmittel umfasst (siehe auch folgende Ausführungen zu Alterungsschutzmitteln und Beispiele unten).

Der Anteil an herkömmlichen Alterungsschutzmitteln, wie insbesondere 6PPD und andere Phenylendiamine in der Kautschukmischung wird bevorzugt um 50 bis zu 100%, bevorzugter 70 bis 100%, bevorzugter 90 bis 100 %, besonders bevorzugt 99 bis 100 % gegenüber üblichen Mischungsverhältnissen reduziert.

Die Kautschukmischung enthält bevorzugt insbesondere einen verringerten Anteil an den folgend genannten Alterungsschutzmitteln, wie z. B. Diamine, wie N-Phenyl-N'-(1 ,3-dimethylbutyl)-p-phenylendiamin (6PPD), N,N'-Diphenyl-p-phenylendiamin (DPPD), N,N'-Ditolyl-p-phenylendiamin (DTPD), N-(1 ,4-dimethylpentyl)-N'-phenyl-p-phenylendiamin (7PPD), N-Isopropyl-N'-phenyl-p-phenylendiamin (IPPD).

Die Kautschukmischung enthält bevorzugt einen reduzierten Anteil von 0,0 bis 1,25 phr an den vorgenannten Alterungsschutzmitteln, insbesondere an Phenylendiaminen wie insbesondere an 6PPD bzw. an DTPD, bevorzugter 0,0 bis 0,65 phr, besonders bevorzugt 0,0 bis 0,1 phr oder genau 0,0 phr.

Statt den vorgenannten Alterungsschutzmitteln enthält die Kautschukmischung zum Schutz vor Wechselwirkungen mit Sauerstoff weiterhin substituierte Phenolverbindungen einschließlich substituierte (Mono-)Phenole wie 2,6-Di-tert-butyl-4-methylphenol (=Butylhydroxytoluol,BHT) und/oder BKF (z.B. Vulkanox ^{®} BKF); substituierte Bisphenole wie 2,2'-Methylenbis(4-methyl-6-tert-butylphenol) (BPH) und/oder 2,2'-Methylenbis(4-methyl-6-cyclohexyl-phenol) (CPH); oder auch substituierte Trisphenole. Weitere konkrete Beispiele für geeignete substituierte Phenolverbindungen sind z.B. (nicht erschöpfend) Lowinox^{®} CPL, Lowinox^{®} WSP, Sumilizer ^{®} GA-80, Sumilizer ^{®} GM, Sumilizer ^{®} GS.

Die Gesamtsumme der genannten substituierten Phenolverbindungen in der Kautschukmischung beträgt bevorzugt 1 bis 7,5 phr, bevorzugter 2 bis 5 phr, bevorzugter 2 bis 3 phr.

Die Zugabe der substituierten Phenolverbindungen zur Kautschukmischung sorgt auch bei einem ansonsten weitgehenden oder vollständigen Verzicht auf herkömmliche, z.B. aminische, Alterungsschutzmittel (siehe oben), für eine ausreichende Beständigkeit des vulkanisierten Kautschuks gegen Wechselwirkungen mit Sauerstoff.

In Kopplung mit der Teilhydrierung der Dienkautschuke, die die Wechselwirkungen mit Ozon reduzieren, kann somit auf herkömmliche Alterungsschutzmittel wie Phenylendiamine weitgehend oder vollständig verzichtet werden.

Die Reduzierung der herkömmlichen Alterungsschutzmittel, insbesondere der Phenylendiamine führt nicht zu einer Verschlechterung des Alterungsschutzes (Schutz vor Wechselwirkung mit Sauerstoff und Ozonschutz) im Vergleich zu Referenzmischungen, da der Alterungsschutz der Kautschukmischung bzw. des Vulkanisats durch die Teilhydrierung der eingesetzten Dienkautschuke und der Zugabe von substituierten Phenolverbindungen vorteilhaft verbessert ist.

Die Summe der enthaltenen Kautschuke ergibt definitionsgemäß 100 phr.

Mit den erfindungsgemäßen Anteilen an Butadien-Kautschuk (BR) und/oder SBR wird die der Erfindung zugrunde liegende Aufgabe besonders gut gelöst.

Bevorzugt besteht die Kautschukmischung aus BR/SBR und optional weiterhin NR/IR. Das heißt, die Anteile an BR und/oder SBR und optional NR und/oder IR in phr addieren sich bevorzugt zu 100 phr.

Weitere mögliche Dienkautschuke, die in der erfindungsgemäßen Mischung in kleineren Mengen enthalten sein können, sind Butadien-Isopren-Kautschuk, Styrol-Isopren-Kautschuk, Halobutyl-Kautschuk, Polynorbornen, Isopren-Isobutylen-Copolymer, Ethylen-Propylen-Dien-Kautschuk, Nitril-Kautschuk, Chloropren-Kautschuk, AcrylatKautschuk, Fluor-Kautschuk, Silikon-Kautschuk, Polysulfid-Kautschuk, Epichlorhydrin-Kautschuk, Styrol-Isopren-Butadien-Terpolymer, hydrierter Acrylnitrilbutadien-Kautschuk und hydrierter Styrol-Butadien-Kautschuk.

Der oder die verwendeten Dienkautschuke weisen bevorzugt eine gewichtsmittlere Molmasse Mw, gemessen mittels GPC, im Bereich von 200000 bis 5000000 g/mol, bevorzugt im Bereich von 250000 bis 2500000, auf.

Dabei finden die dem Fachmann für diese Kautschuke bekannten Füllstoffe, Feinchemikalien (z.B. Weichmacher), Vulkanisationssysteme und Zuschlagstoffe bevorzugte Anwendung.

Der eingesetzte Dienkautschuk ist bevorzugt mit Modifizierungen und Funktionalisierungen gemäß den benutzten Füllstoffen endgruppenmodifiziert und/oder entlang der Polymerketten funktionalisiert. Der Dienkautschuk kann einfach oder beliebig mehrfach modifiziert sein. Bei der Modifizierung kann es sich um solche mit Hydroxy-Gruppen und/oder Ethoxy-Gruppen und/oder Epoxy-Gruppen und/oder Siloxan-Gruppen und/oder Amino-Gruppen und/oder Aminosiloxan und/oder CarboxyGruppen und/oder Phthalocyanin-Gruppen und/oder Silan-Sulfid-Gruppen handeln.

Es kommen aber auch weitere, der fachkundigen Person bekannte, Modifizierungen, auch als Funktionalisierungen bezeichnet, in Frage. Bestandteil solcher Funktionalisierungen können Metallatome sein.

Diese Funktionalisierungen oder Modifikationen sind spezifisch für den verwendeten Füllstoff ausgewählt, insbesondere erfindungsgemäß speziell für Kieselsäurefüllstoffe oder Kohlenstofffüllstoffe bzw. Ruße. Die Begriffe "Kieselsäure", "Silica"/ "Silika" und "Siliziumdioxid" werden im Rahmen der vorliegenden Erfindung synonym verwendet.

Alle verwendeten Kautschukmaterialien können auf recycelten, erneuerbaren und/oder biobasierten Rohstoffen oder auch auf Recyclingmaterial basieren, z.B. auf Recyclinggummi, insbesondere auf recyceltem Naturkautschuk oder IR/BR/SBR-Recyclinggummi.

Die erfindungsgemäße Kautschukmischung enthält bevorzugt mindestens 10 phr Füllstoffe. Bevorzugter mindestens 20 phr, bevorzugter mindestens 30 phr. Eine Obergrenze liegt bevorzugt bei maximal 200 phr an Füllstoffen, bevorzugter bei maximal 170 phr.

Die Füllstoffe sind bevorzugt verstärkende Füllstoffe, die insbesondere aus Kieselsäure (= Silica/Silika, = Siliziumdioxid) und Rußen ausgewählt sind.

Die Ruße können aus Industrierußen (englisch "Carbon Black") und Pyrolyse-Rußen ausgewählt sein. Zum Einsatz kommen können dabei die dem Fachmann bekannten Ruße für Kautschukmischungen.

Der verwendete Füllstoff (z. B. Kieselsäure, Ruße oder andere Füllstoffe) kann teilweise oder vollständig aus recyceltem, erneuerbarem und/oder biobasiertem Material bestehen, z.B. aus wiedergewonnenem oder recyceltem Füllstoff oder aus Füllstoff auf der Basis von aus nachhaltigen oder nachwachsenden Rohstoffen, z. B. Kieselsäure auf der Basis von Reishülsen oder Ruß auf der Grundlage von Pflanzenöl, wie z.B. Palmöl, Rapsöl usw.

Zu den weiteren optionalen nicht verstärkenden Füllstoffen zählen im Rahmen der vorliegenden Erfindung z.B. Alumosilicate, Kaolin, Kreide, Stärke, Magnesiumoxid, Aluminiumhydroxid, Aluminiumoxide, Titandioxid oder Kautschukgele sowie Fasern (wie zum Beispiel Aramidfasern, Glasfasern, Carbonfasern, Cellulosefasern).

Weitere ggf. verstärkende Füllstoffe sind z.B. Kohlenstoffnanoröhrchen (carbon nanotubes (CNT) inklusive diskreter CNTs, sogenannte hollow carbon fibers (HCF) und modifizierte CNT enthaltend eine oder mehrere funktionelle Gruppen, wie Hydroxy-, Carboxy und Carbonyl-Gruppen), Graphit und Graphene und sogenannte "carbon-silica dual-phase filler".

Des Weiteren kann die Kautschukmischung übliche Feinchemikalien und andere Zusatzstoffe in üblichen Gewichtsteilen enthalten, die bei deren Herstellung bevorzugt in wenigstens einer Grundmischstufe zugegeben werden. Zu diesen Feinchemikalien und Zusatzstoffen zählen
1) Aktivatoren, wie z. B. Zinkoxid und Fettsäuren (z. B. Stearinsäure) und/oder sonstige Aktivatoren, wie Zinkkomplexe wie z.B. Zinkethylhexanoat,
2) weitere Aktivatoren und/oder Agenzien für die Anbindung von Füllstoffen, insbesondere Ruß, wie beispielsweise S-(3-Aminopropyl)-Thioschwefelsäure und/oder deren Metallsalze,
3) einen oder mehrere Weichmacherharze, wobei das eine oder die mehreren Weichmacherharze eine gewichtsmittlere Molmasse Mw, gemessen mittels GPC, im Bereich von 200 bis 50000 g/mol, bevorzugt im Bereich von 400 bis 40000 g/mol, besonders bevorzugt im Bereich von 600 bis 30000 g/mol, ganz besonders bevorzugt im Bereich von 800 bis 20000 g/mol, aufweisen,
4) Mastikationshilfsmittel, wie z. B. 2,2'-Dibenzamidodiphenyldisulfid (DBD) und
5) Prozesshilfsmittel, wie insbesondere Fettsäureester und Metallseifen, wie z.B. Zinkseifen und/oder Calciumseifen,
6) Weichmacher, wie insbesondere aromatische, naphthenische oder paraffinische Mineralölweichmacher, wie z.B. MES (Mild Extraction Solvate) oder RAE (Residual Aromatic Extract) oder TDAE (Treated Distillate Aromatic Extract), oder Rubber-to-Liquid-Öle (RTL) oder Biomass-to-Liquid-Öle (BTL) bevorzugt mit einem Gehalt an polycyclischen Aromaten von weniger als 3 Gew.-% gemäß Methode IP 346 oder Triglyceride, wie z. B. Rapsöl, oder Faktisse oder Kohlenwasserstoffharze oder Flüssig-Polymere, deren mittleres Molekulargewicht (Bestimmung per GPC = gel permeation chromatography, in Anlehnung an BS ISO 11344:2004) zwischen 500 und 20000 g/mol liegt.

Bei der Verwendung von Mineralöl ist dieses bevorzugt ausgewählt aus der Gruppe, bestehend aus DAE (Destillated Aromatic Extracts), RAE (Residual Aromatic Extract), TDAE (Treated Destillated Aromatic Extracts), MES (Mild Extracted Solvents) und naphthenischen Ölen.

Der Mengenanteil der Gesamtmenge an weiteren Zusatzstoffen beträgt bevorzugt zwischen 5 und 130 phr, besonders bevorzugt 5 bis 100 phr und ganz besonders bevorzugt 5 bis 80 phr.

In einer Ausführungsform weist die Kautschukmischung neben allen zuvor genannten Bestandteilen keine weiteren Bestandteile auf.

Die erfindungsgemäße Kautschukmischung wird bevorzugt vulkanisiert verwendet. Die Erfindung umfasst auch das Vulkanisat der Kautschukmischung.

Die Begriffe "vulkanisiert" und "vernetzt" werden im Rahmen der vorliegenden Erfindung synonym verwendet.

Die Vulkanisation der erfindungsgemäßen Kautschukmischung wird bevorzugt in Anwesenheit von Schwefel und/oder Schwefelspendern mit Hilfe von Vulkanisationsbeschleunigern durchgeführt, wobei einige Vulkanisationsbeschleuniger zugleich als Schwefelspender wirken können. Dabei ist der Beschleuniger ausgewählt aus der Gruppe bestehend aus Thiazolbeschleunigern, Mercaptobeschleunigern, Sulfenamidbeschleunigern, Thiocarbamatbeschleunigern, Thiurambeschleunigern, Thiophosphatbeschleunigern, Thioharnstoffbeschleunigern, Xanthogenat-Beschleunigern und Guanidin-Beschleunigern. Bevorzugt ist die Verwendung wenigstens eines Sulfenamidbeschleunigers, der ausgewählt ist aus der Gruppe bestehend aus N-Cyclohexyl-2-benzothiazolsufenamid (CBS), N,N-Dicyclohexylbenzothiazol-2-sulfenamid (DCBS), Benzothiazyl-2-sulfenmorpholid (MBS), N-tert-Butyl-2-benzothiazylsulfenamid (TBBS), N-tert-Butyl-2-benzothiazolsulfenimid (TBSI), und/oder wenigstens eines Guanidin-Beschleunigers, wie Diphenylguanidin (DPG).

Insbesondere können auch zwei oder mehrere Beschleuniger eingesetzt werden.

Als schwefelspendende Substanz können dabei alle dem Fachmann bekannten schwefelspendenden Substanzen verwendet werden.

Ferner kann in der Kautschukmischung eines oder mehrere Reversionsschutzmittel, wie beispielsweise 1 ,6-Bis(N,N-dibenzylthiocarbamoyldithio)hexan, Hexamethylen-1 ,6-bis(thiosulfat) Dinatriumsalz-Dihydrat, und/oder Tetrabenzylthiuramdisulfid (TBzTD), eingesetzt werden.

Außerdem können in der Kautschukmischung Vulkanisationsverzögerer vorhanden sein.

Die Herstellung der Kautschukmischung erfolgt ansonsten nach dem in der Kautschukindustrie üblichen Verfahren, bei dem zunächst in einer oder mehreren Mischstufen eine Grundmischung mit allen Bestandteilen außer dem Vulkanisationssystem (z. B. Schwefel und vulkanisationsbeeinflussende Substanzen) hergestellt wird. Durch Zugabe des Vulkanisationssystems in den Mischstufen, bevorzugt in der letzten Mischstufe, wird die Fertigmischung erzeugt.

Die Fertigmischung wird z.B. durch einen Extrusionsvorgang oder Kalandrieren weiterverarbeitet und in die entsprechende Form gebracht. Die erfindungsgemäße Kautschukmischung ist besonders für die Verwendung im Fahrzeugreifen, insbesondere Fahrzeugluftreifen geeignet.

Zur Verwendung als Komponente in Fahrzeugreifen wird die Mischung als Fertigmischung vor der Vulkanisation in die entsprechende Form gebracht und bei der Herstellung des Fahrzeugreifenrohlings wie bekannt aufgebracht und vulkanisiert.

Gegenstand der vorliegenden Erfindung ist wie eingangs bereits ausgeführt insbesondere ein Fahrzeugreifen, der in wenigstens einer Komponente ein Vulkanisat aus der vulkanisierten erfindungsgemäßen Kautschukmischung aufweist.

Unter Fahrzeugreifen werden im Rahmen der vorliegenden Erfindung Fahrzeugluftreifen und Vollgummireifen sowie nicht-pneumatische Reifen wie zum Beispiel mit Speichen, inklusive Reifen für Industrie- und Baustellenfahrzeuge, LKW-, PKW- sowie Zweiradreifen verstanden.

Bei den Fahrzeugreifen kann es sich weiterhin um einen Neureifen, einen warmrunderneuerten Reifen oder einen kaltrunderneuerten Reifen handeln.

Die Erfindung soll nun anhand von Vergleichs- und Ausführungsbeispielen näher erläutert werden.

Das erfindungsgemäße Beispiel ist mit E1, das Vergleichsbeispiel mit V1 gekennzeichnet.

In E1 wurde anders als in V1 ein teilhydrierter SSBR verwendet. Der Hydrierungsgrad des SSBRs im Anwendungsbeispiel beträgt 76 %. Also sind 76 % der Doppelbindungen des SSBRs hydriert worden. In E1 wurde weiterhin der Anteil an Alterungsschutzmitteln auf Phenylendiamin-Basis (z.B. 6PPD) auf 0 phr reduziert. Dafür wurde dieselbe Menge an einem substituierten Phenol (z.B. Vulkanox^{®} BKF) zugesetzt.

Die Massenanteile in phr sind in Tabelle 1 angegeben.

**Tabelle 1:**

| Bestandteile (in phr) | V1 | E1 |
|---|---|---|
| NR | 60 | 60 |
| SSBR, Doppelbindungen unhydriert | 40 | - |
| Teilhydrierter SSBR, Hydrierungsgrad 76 % | - | 40 |
| Füllstoffe (Ruß, Silika, weitere) | 50 | 50 |
| Feinchemikalien (u.a. Weichmacher) | 8,5 | 8,5 |
| 6PPD | 2,5 | - |
| Substituiertes Phenol (im Beispiel Vulkanox^{®} BKF) | - | 2,5 |
| Vulkanisierungschemikalien einschließlich Schwefel/Beschleuniger | 2,4 | 2,4 |

Die Mischungsherstellung erfolgte unter üblichen Bedingungen in mehreren Stufen in einem Labortangentialmischer. Aus sämtlichen Mischungen wurden Prüfkörper durch Vulkanisation hergestellt und mit diesen Prüfkörpern für die Kautschukindustrie typische physikalische Materialeigenschaften bestimmt. Für die obig beschriebenen Tests an Prüfkörpern wurden folgende Testverfahren angewandt:
- Rückprallelastizität ("Resilience") bei Raumtemperatur (RT = 23 °C in den vorliegenden Beispielen) gemäß ISO 4662,
- Zugfestigkeit sowie Bruchdehnung bei RT oder 70 °C gemäß ISO 37,
- Verlustfaktor tan d, synonym zu tan δ, bei 0 °C aus dynamisch-mechanischer Messung gemäß DIN 53 513; 50/30 N: statische Anfangskraft 30 N, dynamische Oszillation zwischen 30 und 50 N,
- Das Speichermodul E'mean gibt den Mittelwert der Dehnungen aus 0,1-12,0% an; gemessen wird gemäß DIN 53 513 bei einer Temperatur von 55 °C und einer Frequenz von 10 Hz.

Die physikalischen Materialeigenschaften vor und nach einem Alterungsprozess wurden verglichen.

Im Alterungsprozess wurden die Prüfkörper für 28 Tage in Umgebungsluft einer Temperatur von 70 °C ausgesetzt. Die Alterung wurde nach DIN 53508 "Prüfung von Kautschuk und Elastomeren - Künstliche Alterung" durchgeführt.

Die Ergebnisse vor und nach der Alterung sind in Tabelle 2 dargestellt.

**Tabelle 2:**

| Messung | Einheit | V1 | E1 |
|---|---|---|---|
| Vor Alterung: | | | |
| Rückprallelastizität RT | % | 47,1 | 45,1 |
| Zugfestigkeit RT | MPa | 24,7 | 20,7 |
| Zugfestigkeit 70 °C | MPa | 19,6 | 16,3 |
| Bruchdehnung RT | % | 546 | 550 |
| Bruchdehnung 70 °C | % | 548 | 593 |
| Speichermodul E'mean 55 °C | MPa | 11,1 | 13,9 |
| Verlustfaktor tan d 0°C 50/30 N | - | 0,274 | 0,285 |

| Nach Alterung (28 Tage, 70 °C, Luft): | | | |
|---|---|---|---|
| Rückprallelastizität RT | % | 49,6 | 44,9 |
| Zugfestigkeit RT | MPa | 21,1 | 20,2 |
| Zugfestigkeit 70 °C | MPa | 16,1 | 14,9 |
| Bruchdehnung RT | % | 395 | 410 |
| Bruchdehnung 70 °C | % | 369 | 396 |
| Speichermodul E'mean 55 °C | MPa | 14,4 | 18,1 |
| Verlustfaktor tan d 0°C 50/30 N | - | 0,253 | 0,264 |

Wie in Tabelle 2 zu sehen, ist bei Verwendung der erfindungsgemäßen Kautschukmischung E1 trotz Verzicht auf Phenylendiamine kein signifikanter Alterungseffekt zu beobachten. Die Werte für die gemessenen physikalischen Eigenschaften bleiben nach dem Alterungsprozess in derselben Größenordnung wie vor der Alterung.

Die gemessenen Werte für die Kautschukmischung E1 sind darüber hinaus überraschenderweise nach der Alterung ähnlich wie die Werte für die Kautschukmischung V1 nach der Alterung (in welcher 6PPD verwendet wird).

Überraschenderweise verbessern sich durch die Verwendung der erfindungsgemäßen Kautschukmischung E1 weiterhin sogar die Nassbremseigenschaften gegenüber der Referenzmischung V1.

Kennzahlen für die Nassbremseigenschaften sind die Rückprallelastizität bei Raumtemperatur, die in E1 gegenüber V1 abnimmt, und der Verlustfaktor tan d bei 0°C, der in E1 gegenüber V1 zunimmt, was beides auf eine Verbesserung der Nassbremseigenschaften hindeutet (vgl. Tabelle 2).

## Patentansprüche

1. Kautschukmischung, die wenigstens folgende Bestandteile enthält:
a) 40 bis 100 phr, bevorzugt 60 bis 90 phr zumindest eines teil-hydrierten Dienkautschuks, ausgewählt aus Butadien-Kautschuk und/oder Styrol-Butadien-Kautschuk, wobei der Hydrierungsgrad, also der Anteil der ursprünglichen Doppelbindungen des teil-hydrierten Dienkautschuks, die vollständig hydriert wurden, 45 bis 95 % beträgt,
b) 1 bis 7,5 phr, bevorzugt 2 bis 5 phr zumindest einer substituierten Phenolverbindung.

2. Kautschukmischung gemäß Anspruch 1, die weiterhin folgende Bestandteile enthält:
a) bis zu maximal 60 phr, bevorzugt zwischen 10 und 40 phr eines nicht-hydrierten Dienkautschuks, ausgewählt aus Polyisopren, Butadien-Kautschuk und Styrol-Butadien-Kautschuk.

3. Kautschukmischung gemäß einem der Ansprüche 1 oder 2, wobei der Styrol-Butadien-Kautschuk lösungspolymerisiert ist.

4. Kautschukmischung einem der Ansprüche 1 bis 3, wobei sich die Mengen an den angegebenen Dienkautschuken zu 100 phr addieren.

5. Kautschukmischung gemäß einem der Ansprüche 1 bis **4,** wobei der Hydrierungsgrad 60 bis 85 %, besonders bevorzugt zwischen 70 und 85 % beträgt.

6. Kautschukmischung gemäß einem der Ansprüche 1 bis 5, wobei die substituierten Phenolverbindungen ausschließlich substituierte Monophenole und Bisphenole umfassen.

7. Kautschukmischung gemäß einem der Ansprüche 1 bis 6, wobei die Kautschukmischung maximal 1,25 phr, bevorzugt maximal 0,65 phr, besonders bevorzugt 0,0 phr bis 0,1 phr an aminischen Alterungsschutzmitteln, insbesondere an Phenylendiaminen umfasst.

8. Vulkanisat erhalten durch Schwefelvulkanisation einer Kautschukmischung gemäß einem der Ansprüche 1 bis 7.

9. Verwendung des Vulkanisats gemäß Anspruch 8 in einem Fahrzeugreifen.

10. Fahrzeugreifen, bei dem es sich um einen Neureifen, einen warmrunderneuerten Reifen oder einen kaltrunderneuerten Reifen handelt, der ein Luftreifen, ein Vollgummireifen oder ein nicht-pneumatischer Reifen mit Speichenkonstruktion ist, wobei der Reifen in zumindest einer Komponente das Vulkanisat gemäß Anspruch 8 enthält.
